# EUROPEAN PATENT APPLICATION

(11) **EP 4 371 904 A1**
(43) Date of publication of application: **22.05.2024**
(21) Application number: 23210710.2
(22) Date of filing: 17.11.2023
(51) Int. Cl.: B65G 1/02, E01F 15/14

(54) **RACKING PROTECTOR**

(30) Priority: 17.11.2022 GB 202217226
(71) Applicant: PD Industrial Ltd, Wolverhampton West Midlands WV10 7DZ (GB)
(72) Inventor: Hardiman, Darren, Bednall, ST17 0YS (GB)
(74) Representative: Cameron Intellectual Property Ltd

(57) **Abstract**

A racking system (10) comprising a racking unit for holding goods thereon, the racking unit having at least one leg (14) and at least one protective shroud (12). The at least one protective shroud (12) is arranged to at least partially encircle a portion of the at least one leg (14). The at least one protective shroud (12) is arranged to be rotatable about the at least one leg (14).

## Description

### Technical Field

The present disclosure relates to a protective shroud for protecting a leg of a racking unit, particularly, but not exclusively, to a protective shroud which can be arranged to at least partially encircle the leg of the racking unit such that it protects it from impacts from external forces/entities.

### Background

Racking units are commonly used in storage facilities and warehouses and will typically have several shelves on which goods are stored. Warehouses and storage facilities will usually have a high volume of traffic from forklifts and other similar vehicles. As a result of the high volume of traffic, forklifts may collide with the racking units, causing damage to their supporting legs resulting in them needing to be replaced or fixed.

Current racking protection units require the protector to be fixedly attached to the racking unit at the floor and/or the leg of the racking unit. However, current racking protection units tend to get damaged over time, resulting in less protection of the racking unit legs. This means that either the racking protection unit or the racking unit itself needs fixing or replacing.

There is therefore a requirement for a product and method that can improve protection of racking units.

### Summary of the Disclosure

There is provided a racking system comprising a racking unit for holding goods thereon, the racking unit having at least one leg and at least one protective shroud, wherein the at least one protective shroud is arranged to at least partially encircle a portion of the at least one leg, and wherein the at least one protective shroud is arranged to be rotatable about the at least one leg. The rotatable protective shroud beneficially provides a system which can rotate and absorb impacts when impacted by an external force. Additionally, the rotatable protective shroud can rotate about the leg instead of directing the force of the impact onto the leg, thus reducing the amount of force transferred onto the leg.

Optionally, the racking unit may comprise one or more shelves, wherein the one or more shelves are configured for holding goods thereon. The one or more shelves may be arranged in the racking unit such that goods can be stacked onto the shelves of the racking unit.

Optionally, the at least one leg of the racking unit may be placed on the ground such that the weight of the of the racking unit is supported by the at least one leg.

Optionally, the at least one leg of the racking unit may be at the bottom of the racking unit such that it can make contact with the ground.

Optionally, the at least one protective shroud is arranged such that it does not completely encircle the portion of the at least one leg. In this configuration, the at least one protective shroud only partially encircles the portion of the at least one leg.

Optionally, the at least one protective shroud is arranged to completely encircle the portion of the at least one leg.

Optionally, the portion of the at least one leg is a lowermost portion of the at least one leg. The lowermost portion of the at least one leg may be in contact with the ground.

Optionally, the at least one protective shroud is arranged around the portion of the at least one leg such that it is rotatable about the at least one leg when in use.

Optionally, the at least one protective shroud is arranged around the portion of the at least one leg such that the entirety of the at least one protective shroud is rotatable about the at last one leg of the racking unit.

Optionally, the at least one protective shroud is arranged around the portion of the at least one leg such that the at least one protective shroud is rotatable about the at last one leg of the racking unit when impacted by an external force.

Optionally, the at least one protective shroud is arranged around the portion of the at least one leg such that it protects the at least one leg from impacts by an external force. The at least one protective shroud provides protection to the at least one leg such that the at least one leg is not permanently damaged from impacts by the external force.

Optionally, the at least one protective shroud is arranged around the portion of the at least one leg such that the at least one protective shroud is rotatable about its own central axis about a longitudinal axis of the at least one leg.

Optionally, the at least one protective shroud is arranged around the portion of the at least one leg such that it is rotatable about the longitudinal axis of the at least one leg.

Optionally, the at least one protective shroud of the racking system may be configured to be arranged to provide a gap between the at least one protective shroud and the at least one leg such that the at least one protective shroud is rotatable about the at least one leg. The gap beneficially provides a space which allows the protective shroud to rotate about the leg of the racking unit.

Optionally, the gap of the racking system may be defined around the entirety of the at least one protective shroud.

Optionally, the gap between the at least one protective shroud and the at least one leg is a space that allows the at least one protective shroud to move freely about the at least one leg.

Optionally, the gap may be maintained around the entirety of the at least one protective shroud.

Optionally, the gap may be maintained around a fraction of the at least one protective shroud such that the gap is not maintained around the entirety of the at least one protective shroud.

Optionally, the at least one protective shroud of the racking system may be arranged to entirely encircle the portion of the at least one leg. This beneficially provides a system which can protect the entire surface of the leg of the racking unit.

Optionally, the at least one protective shroud of the racking system may be cylindrical such that it entirely encircles the at least one leg. This beneficially provides a protective shroud which can deflect oblique impacts from external forces/entities.

Optionally, the at least one protective shroud of the racking system may be shaped such that it has more than one outwardly facing face, for example a rectangular cylinder, a pentahedron or any other shape with more than one outwardly facing face.

Optionally, the at least one protective shroud of the racking system may be arranged to be freely rotatable about the at least one leg. This beneficially provides a protective shroud which can rotate about the leg of the racking unit when impacted by an external force/entity. This rotation about the leg can deflect and absorb impacts.

Optionally, the at least one protective shroud of the racking system may be resiliently deformable. This beneficially provides a protective shroud that can absorb impacts from external forces/entities.

Optionally, the at least one protective shroud of the racking system may be elastic and strong enough to take repeated impacts from an external force. The at least one protective shroud may be resiliently deformable or elastic such that it can take the impact of an external force without translating that impact across to the at least one leg which it is protecting.

Optionally, the at least one protective shroud of the racking system may define an inward facing surface, wherein the inward facing surface is smooth.

Optionally, the inward facing surface is smooth such that it can freely rotate about the at least one leg without catching or snagging the at least one leg.

Optionally, the at least one protective shroud of the racking system may define an outward facing surface, wherein the outward facing surface is smooth.

Optionally, the outward facing surface is smooth such that any oblique impacts from an external force are deflected away from the at least one protective shroud.

Optionally, the at least one protective shroud of the racking system may be configured such that it is translatable along the longitudinal axis of the at least one leg. This beneficially provides a protective shroud that can absorb impacts from external forces/entities by moving upwards away from the ground along the same longitudinal axis as the leg.

Optionally, the at least one protective shroud of the racking system may be arranged such that it is free to move in parallel with a central axis of the at least one leg.

Optionally, the at least one protective shroud comprises at least two segments, and wherein at least two interconnections are formed when the at least two segments connect with each other when they are enveloped around the at least one leg.

Optionally, the at least two segments are fastened at the at least two interconnections using at least one fastening mechanism such that the at least two segments remain arranged around the at least one leg.

Optionally, the at least one fastening mechanism comprises corresponding male and female connectors, and wherein the corresponding male and female connectors are located on opposing ends of the at least two segments such that the corresponding male and female connectors link up when fastening the at least two segments.

Optionally, the at least one protective shroud is formed of one segment, and wherein the one segment is arranged about the at least one leg such that an interconnection is formed between two ends of the at least one segment after being enveloped around the at least one leg.

Optionally, after the one segment is arranged about the lowermost portion of the leg, the segment is fastened at the interconnection formed between the two ends of the at least one segment using at least one fastening mechanism such that it remains arranged around the at least one leg.

Optionally, the at least one fastening mechanism comprises corresponding male and female connectors, and wherein the corresponding male and female connectors are located on opposing ends of the one segment such that the corresponding male and female connectors can be connected when fastening the one segment.

Optionally, the at least one fastening mechanism comprises a locking slot, wherein the locking slot is configured to receive a screw such that the at least one fastening mechanism remains locked.

Optionally, the protective shroud extends between 4 and 20 cm upwardly from a lowermost surface of the at least one protective shroud.

Optionally, the at least one protective shroud has an outer radius of between 4 and 20 cm when arranged about the at least one leg.

Optionally, the at least one protective shroud of the racking system may be arranged at the lowermost portion of the at least one leg. This beneficially provides a protective shroud that can protect the portion of the leg which is most commonly impacted by external forces/entities.

Optionally, the at least one protective shroud may be arranged at a portion located on any part of the at least one leg.

Optionally, the at least one protective shroud of the racking system may be biased away from the at least one leg. This beneficially provides a protective shroud that can return to its equilibrium position after being impacted by an external force/entity.

Optionally, the at least one protective shroud may be biased away from the at least one leg such that it returns to an equilibrium position after being deflected due to an impact by an external force.

Optionally, the at least one protective shroud of the racking system may comprise at least two segments removably connected to each other. This beneficially provides a protective shroud that can be assembled around the leg of a racking unit which is already *in situ* in the warehouse or storage facility.

Optionally, the at least two segments may be removably connected to each other such that they at least partially encircle the portion of the at least one leg.

There is further provided a method of protecting at least one leg of a racking unit, the method comprising disposing at least one protective shroud around a portion of the at least one leg such that it partially encircles the portion of the at least one leg, wherein the at least one protective shroud is arranged to be rotatable about the at least one leg. This beneficially provides a protective shroud that can rotate when impacted by an external force/entity.

Optionally, the at least one protective shroud may be disposed around the portion of the at least one leg such that a gap is provided between the at least one protective shroud and the portion of the at least one leg.

Optionally, the at least one protective shroud may be disposed around the portion of the at least one leg such that the gap is defined around the entirety of the at least one protective shroud.

Optionally, the at least one protective shroud may be disposed around the portion of the at least one leg such that it rotates about the at least one leg when the at least one protective shroud is impacted by an external force.

Optionally, the at least one protective shroud rotates about the at least one leg such that the at least one protective shroud protects the at least one leg by deflecting impacts from the external force.

Optionally, the at least one protective shroud may be disposed around the portion of the at least one leg such that it freely rotates about the at least one leg when the at least one protective shroud is impacted by the external force.

Optionally, the at least one protective shroud may be disposed around the portion of at least one leg such that it entirely encircles the at least one leg, wherein the at least one protective shroud is configured to protect the entire surface of the portion of the at least one leg when the at least one protective shroud is impacted by the external force.

Optionally, the at least one protective shroud may be disposed around the at least one leg such that the at least one protective shroud translates along the longitudinal axis of the at least one leg when the at least one protective shroud is impacted by the external force.

Optionally, the at least one protective shroud is resiliently deformable such that it deforms when impacted by the external force.

Optionally, the at least one protective shroud may be cylindrical, wherein its cylindrical shape deflects oblique impacts.

Optionally, the at least one protective shroud may be biased away from the portion of the at least one leg, wherein the biasing returns the at least one protective shroud to an equilibrium position after impact by the external force.

There is further provided a kit of parts for protecting a racking unit, the kit comprising a racking unit and a protective shroud, wherein the racking unit comprises at least one leg, and wherein the protective shroud is arranged to at least partially encircle a portion of the at least one leg, and wherein the at least one protective shroud is arranged to be rotatable about the at least one leg.

Optionally, the protective shroud comprises at least two segments, wherein the at least two segments are lockingly configurable such that the at least two segments can be encircled about the at least one leg and engaged to each other.

There is further provided a system for protecting a leg of a structure, wherein the system comprises a protective shroud that envelops a lowermost segment of the leg; and a fastening mechanism for fastening the protective shroud such that the protective shroud remains enveloped around the lowermost segment of the leg, wherein the protective shroud comprises of two portions, and wherein the two portions are wrapped around the lowermost portion of the leg and fastened to each other using the fastening mechanism, such that the protective shroud remains enveloped around the leg of the structure.

Optionally, the fastening mechanism for fastening the two portions of the protective shroud comprises male and female connections on opposing ends of each of the two portions. The male and female connections engage with each other such that the two portions of the protective shroud are fastened to each other forming one continuous protective shroud about the at least one leg.

Optionally, the protective shroud comprises one segment, wherein the at least one segment is lockingly configurable such that the at least one segment can be encircled about the at least one leg and fastened in place using a fastening mechanism forming one continuous protective shroud.

Optionally, the fastening mechanism for fastening the one portion of the protective shroud comprises a male and female connection on opposing ends of the one portion. The male and female connections engage with each other such that the one portion of the protective shroud is fastened forming one continuous protective shroud about the at least one leg.

Optionally, the protective shroud extends between 4 and 20 cm upwardly from its downwardly facing end.

Optionally, the protective shroud extends between 7 and 15 cm upwardly from its downwardly facing end.

Optionally, the protective shroud extends 10 cm upwardly from its downwardly facing end.

Optionally, the protective shroud is formed of a flexible material.

Optionally, the outward facing surface of the protective shroud has a radius between 4 and 20 cm when enveloped around the lowermost portion of the leg.

Optionally, the outward facing surface of the protective shroud has a radius between 7 and 15 cm when enveloped around the lowermost portion of the leg.

Optionally, the outward facing surface of the protective shroud has a radius between 8 and 9 cm when enveloped around the lowermost portion of the leg.

Optionally, the racking system may be a shelving system.

Optionally, the racking unit may be a shelving unit.

Further features and advantages of the present disclosure will become apparent from the claims and the following description.

### Brief Description of Drawings

Embodiments of the present disclosure will now be described by way of example only, with reference to the following diagrams, in which:-
Figure 1 is a cross-sectional top-down view of a racking system comprising a protective shroud arranged around a leg of a racking unit;
Figure 2 is a perspective view of the partially assembled protective shroud;
Figure 3 is a perspective view of a segment of the protective shroud;
Figure 4 is a perspective view of the partially assembled protective shroud of Figure 2 arranged about a lowermost portion of the leg of a racking unit; and
Figure 5 is a flow chart outlining a method of using the protective shroud when arranged about the leg of a racking unit.

### Detailed Description

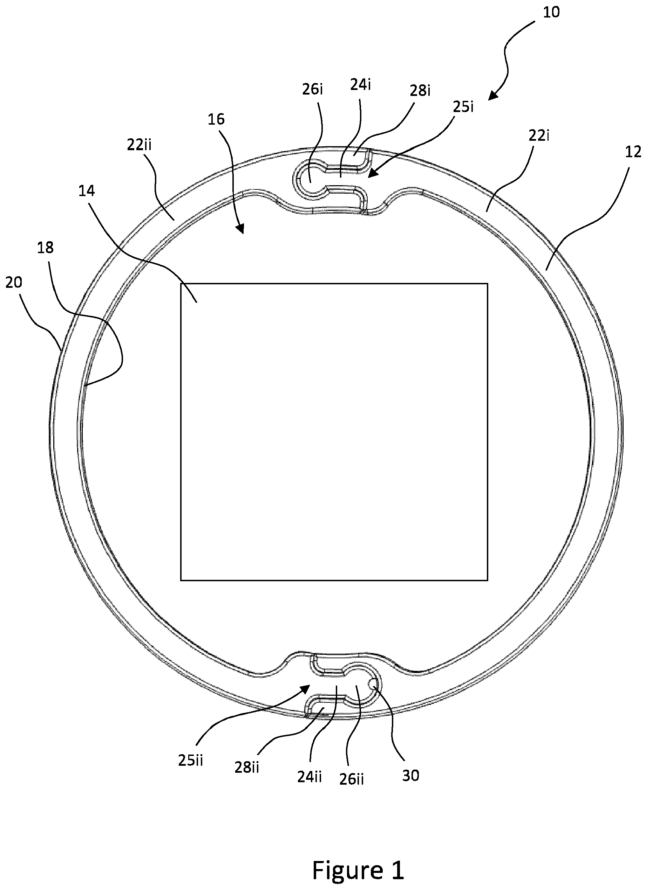

To place embodiments in a suitable context, reference will firstly be made to Figure 1 which shows a cross-sectional top-down view of a racking system 10 comprising a protective shroud 12 arranged around a leg 14 of a racking unit (not entirely shown). The protective shroud 12 is arranged around the leg 14 of the racking unit such that it at least partially encircles the leg 14. The protective shroud 12 may be cylindrical such that it can at least partially encircle the leg 14 of the racking unit.

The racking unit (not entirely shown) may comprise a plurality of legs 14 arranged to support the weight of the racking unit when it is placed in a warehouse or storage facility. The plurality of legs 14 may be arranged at the corners of the racking unit. The plurality of legs 14 may extend down to the ground. The racking unit may also comprise one or more shelves on which goods may be stored. The one or more shelves may be arranged above one another such that goods can be stacked on the one or more shelves of the racking unit. Additionally, a warehouse or storage facility may comprise a plurality of racking units arranged alongside each other.

The racking unit may come pre-assembled or may come as a plurality of separate parts that need to be assembled in the warehouse or storage facility. The plurality of separate parts may comprise one or more legs and one or more shelves.

The protective shroud 12 is arranged about the leg 14 of the racking unit such that a gap 16 is provided between the protective shroud 12 and the leg 14. The gap 16 provides a space between the protective shroud 12 and the leg 14 such that the protective shroud can rotate about the longitudinal axis of the leg 14. The gap 16 may be defined around the entirety of the protective shroud 12 (as shown in Figure 1) or may be defined around a fraction/part of the protective shroud 12.

The protective shroud 12 defines an inward facing surface 18 and an outward facing surface 20. The inward facing surface is smooth such that the protective shroud can freely rotate about the leg 14 of the racking unit without catching or snagging the leg 14 after being impacted by an external force. The outward facing surface 20 is also smooth such that the protective shroud 12 can deflect oblique impacts from external forces.

The particular configuration described in Figure 1 comprises two segments 22i, 22ii that are removably connected to each other using two fastening mechanisms 25i, 25ii. The two segments 22i, 22ii are fastened to each other using the two fastening mechanisms 25i, 25ii forming two interconnections 24i, 24ii. The two fastening mechanisms 25i, 25ii allow the two segments 22i, 22ii to be arranged about the leg 14 of the racking unit such that they encircle the leg 14.

The two interconnections 24i, 24ii are formed by the mating of corresponding male 26i, 26ii and female 28i, 28ii connectors located on opposing ends of the two segments 22i, 22ii. The corresponding male 26i, 26ii and female 28i, 28ii connectors are slidingly engageable with each other such that they can be arranged around the leg 14 of a racking unit that has already been built and placed on the floor.

The protective shroud 12 may also comprise of a locking slot 30 defined between the corresponding male 26i, 26ii and female 28i, 28ii connectors. The locking slot 30 is configured to receive a screw such that the two fastening mechanisms 25i, 25ii remain locked after the two segments 22i, 22ii have been slidingly engaged with each other.

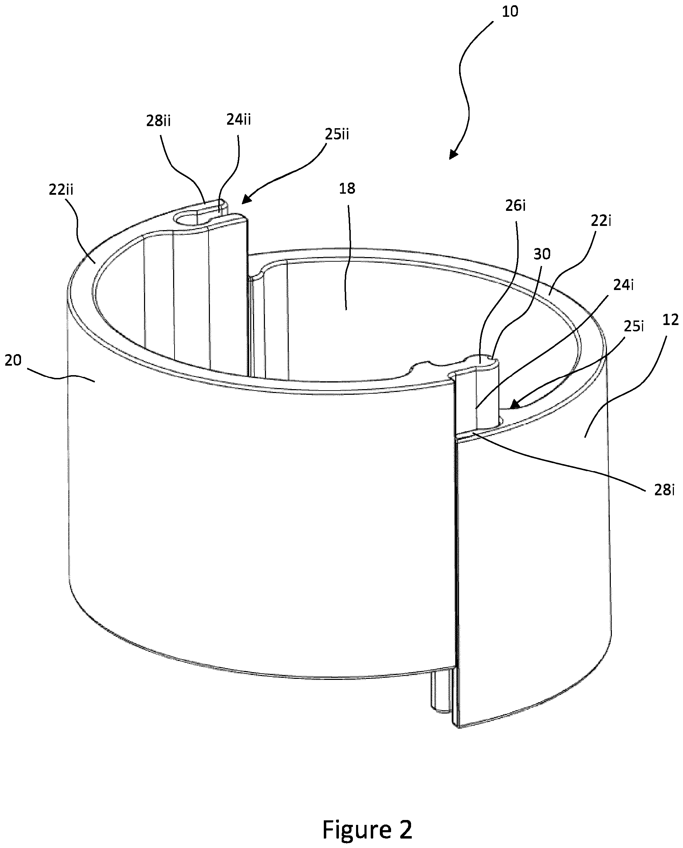

Turning now to Figure 2, there is shown a perspective view of a partially assembled protective shroud 12. The two segments 22i, 22ii of the protective shroud 12 are in the process of being slidably engaged to each other using the fastening mechanisms 25i, 25ii at the two interconnections 24i, 24ii. The male connectors 26i, 26ii are configured to slide into their corresponding female connectors 28i, 28ii creating a complete protective shroud 12 that can encircle the leg 14 of a racking unit.

The protective shroud 12 is cylindrical in shape such that it extends along the longitudinal axis of the leg 14 of the racking unit. The protective shroud 12 in most configurations will be disposed around a lowermost portion of the leg 14 of the racking unit that is in contact with the floor, where the majority of impacts from external forces will occur. In other configurations the protective shroud 12 will be disposed around a portion of the leg 14 that is not in contact with the floor. The protective shroud 12 is configured to extend upwardly along the longitudinal axis of the leg 14 such that it covers a sufficient amount of the leg 14 to stop any impacts from external forces.

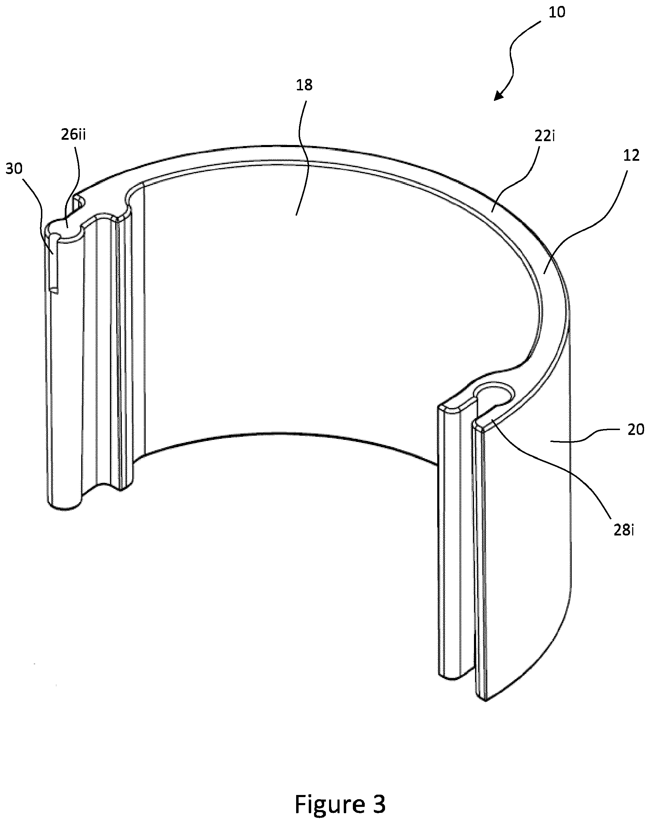

Turning now to Figure 3 there is shown a perspective view of a segment 22i of the protective shroud 12. The female connector 28i and male connector 26ii of the segment 22i are disposed on opposing ends of the segment 22i such that they can mate with their corresponding female 28ii and male 26i connectors on the second segment 22ii.

The locking slot 30 extends from an upper or lower surface of the protective shroud 12 inwardly into the protective shroud 12. The locking slot 30 is long enough to accommodate a screw such that the fastening mechanisms 25i, 25ii can be locked.

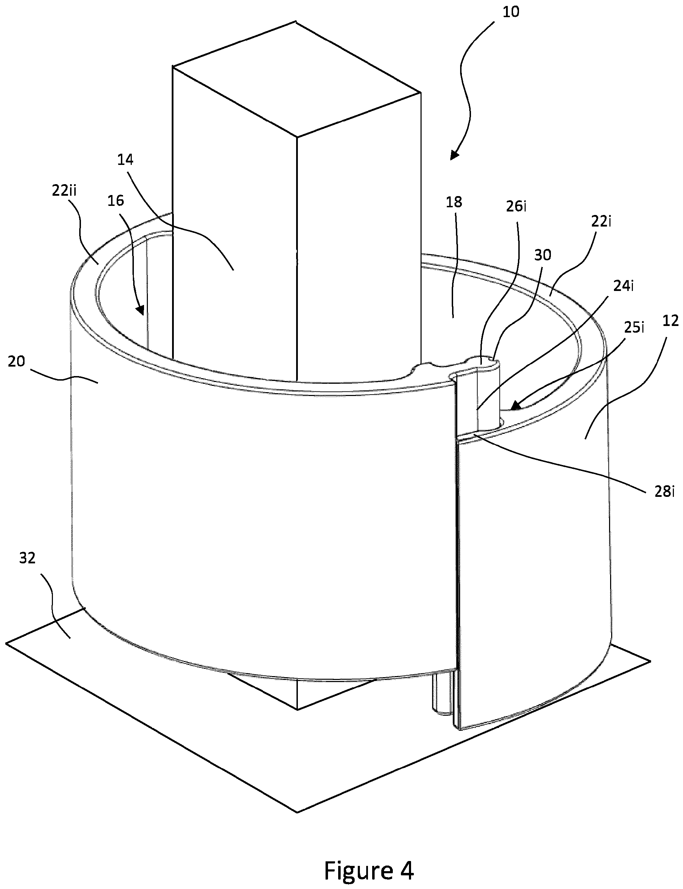

Turning now to Figure 4 there is shown a perspective view of the partially assembled protective shroud 12 of Figure 2 arranged about the lowermost portion of the leg 14 of a racking unit. In this configuration the protective shroud 12 is arranged such that it rests either on the floor or on a base piece 32 of the leg 14 of the racking unit. The two segments 22i, 22ii are configured to lockingly engage with each other such that they encircle the leg 14 of the racking unit. The fastening mechanism 25i, 25ii used in this configuration allow the two segments 22i, 22ii to be fastened to each other around the leg 14 of a racking unit that has already been assembled in a workshop.

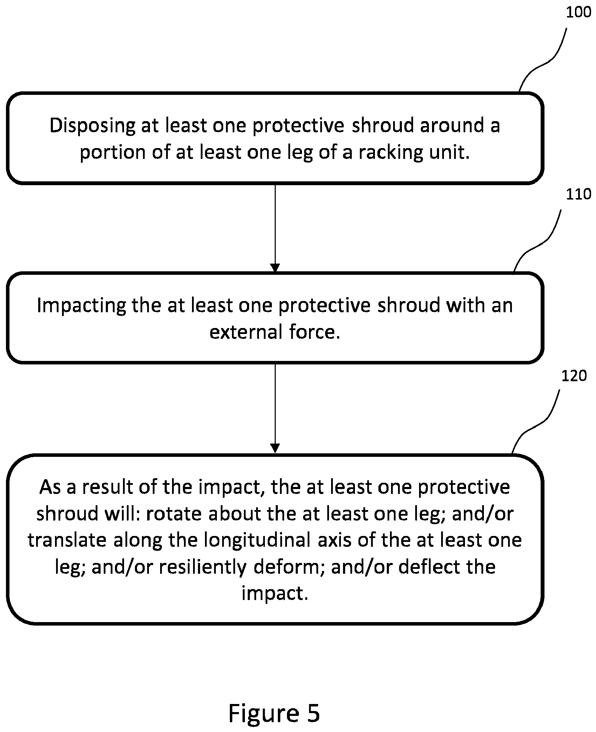

Turning now to Figure 5 there is shown a flow chart outlining a method of using the protective shroud 12 when arranged about the leg 14 of a racking unit. In Step 100 the at least one protective shroud 12 is disposed around the portion of the leg 14 of the racking unit such that it at least partially encircles the leg 14. The protective shroud 12 may be disposed such that there is a gap 16 between the protective shroud 12 and the leg 14.

In Step 110, the protective shroud 12 is impacted by an external force. The external force may be from a forklift or other similar vehicle. The external force may also be from a piece of machinery, a tool or a person.

In Step 120, as a result of being impacted by an external force, the protective shroud 12 will rotate about the at least one leg 14, and/or will translate long the longitudinal axis of the at least one leg 14, and/or will resilient deform, and/or will deflect the external force away from the at least one leg 14.

Although particular embodiments of the disclosure have been disclosed herein in detail, this has been done by way of example and for the purposes of illustration only. The aforementioned embodiments are not intended to be limiting with respect to the scope of the summary of the disclosure / appended claims.

Alternative configurations of the racking system may comprise a protective shroud 12 which may be biased away from the leg 14 of the racking unit such that it returns to an equilibrium position after being impacted by an external force. A biasing element may be placed in the gap 16 between the protective shroud 12 and the leg 14.

The protective shroud 12 may comprise one segment that may at least partially encircle the portion of the at least one leg 14. Alternatively, the one segment may entirely encircle the portion of the at least one leg 14. The one segment may fasten itself around the at least one leg 14 using a fastening mechanism. The fastening mechanism may comprise corresponding male and female connectors at opposing ends of the one segment. The corresponding male and female connectors may be slidingly engageable with each other.

It is contemplated by the inventors that various substitutions, alterations, and modifications may be made to the invention without departing from the scope of the invention as defined by the summary of the disclosure / claims.

## Claims

1. A racking system comprising:
a racking unit for holding goods thereon, the racking unit having at least one leg; and
at least one protective shroud,
wherein the at least one protective shroud is arranged to at least partially encircle a portion of the at least one leg, and wherein the at least one protective shroud is arranged to be rotatable about the at least one leg.

2. The racking system of Claim 1, wherein the at least one protective shroud is configured to be arranged to provide a gap between the at least one protective shroud and the at least one leg such that the at least one protective shroud is rotatable about the at least one leg.

3. The racking system of Claim 2, wherein the gap is defined around the entirety of the at least one protective shroud.

4. The racking system of any preceding claim, wherein the at least one protective shroud is arranged to entirely encircle the portion of the at least one leg.

5. The racking system of Claim 4, wherein the at least one protective shroud is cylindrical such that it entirely encircles the at least one leg.

6. The racking system of any preceding claim, wherein the at least one protective shroud is arranged to be freely rotatable about the at least one leg.

7. The racking system of any preceding claim, wherein the at least one protective shroud is resiliently deformable.

8. The racking system of any preceding claim, wherein the at least one protective shroud defines an inward facing surface, and wherein the inward facing surface is smooth.

9. The racking system of any preceding claim, wherein the at least one protective shroud defines an outward facing surface, and wherein the outward facing surface is smooth.

10. The racking system of any preceding claim, wherein the at least one protective shroud is configured such that it is translatable along the longitudinal axis of the at least one leg.

11. The racking system of any preceding claim, wherein the at least one protective shroud is arranged at the lowermost portion of the at least one leg.

12. The racking system of any preceding claim, wherein the at least one protective shroud is biased away from the at least one leg.

13. The racking system of any preceding claim, wherein the at least one protective shroud comprises at least two segments removably connected to each other.

14. A method of protecting at least one leg of a racking unit, the method comprising disposing at least one protective shroud around a portion of the at least one leg such that it partially encircles the portion of the at least one leg, wherein the at least one protective shroud is arranged to be rotatable about the at least one leg.

15. The method of Claim 14, wherein the at least one protective shroud is impacted by an external force such that the at least one protective shroud rotates about the at least one leg; and/or
wherein the at least one protective shroud is impacted by the external force such that the at least one protective shroud freely rotates about the at least one leg; and/or
wherein the at least one protective shroud entirely encircles the portion of the at least one leg such that it protects the entire surface of the portion of the at least one leg when the at least one protective shroud is impacted by the external force; and/or
wherein the at least one protective shroud is impacted by the external force such that the at least one protective shroud translates along the longitudinal axis of the at least one leg; and/or
wherein the at least one protective shroud resiliently deforms when impacted by the external force such that it protects the portion of the at least one leg; and/or
wherein the at least one protective shroud is obliquely impacted by the external force, and wherein the at least one protective shroud is cylindrical such that it can deflect the oblique impact; and/or
wherein the at least one protective shroud biases back to an equilibrium position after impact by the external force such that the at least one protective shroud can protect the portion of the at least one leg from repeated impacts; and/or
wherein the at least one protective shroud is disposed around the portion of the at least one leg such that a gap is provided between the at least one protective shroud and the portion of the at least one leg, and, optionally,
wherein the at least one protective shroud is disposed around the portion of the at least one leg such that the gap is defined around the entirety of the at least one protective shroud.
